# EUROPEAN PATENT APPLICATION

(11) **EP 4 246 297 A1**
(43) Date of publication of application: **20.09.2023**
(21) Application number: 22199308.2
(22) Date of filing: 01.10.2022
(51) Int. Cl.: G06F 3/0482, G06F 3/0484, G06F 3/04842, G06F 3/0486

(54) **INFORMATION PROCESSING APPARATUS, INFORMATION PROCESSING METHOD, AND PROGRAM**

(30) Priority: 16.03.2022 JP 2022041820
(71) Applicant: Fujifilm Business Innovation Corp., Tokyo 107-0052 (JP)
(72) Inventor: YAMADA, Ryohei, Yokohama (JP); KITAZAWA, Yuka, Yokohama (JP)
(74) Representative: Meissner Bolte Partnerschaft mbB

(57) **Abstract**

An information processing apparatus includes a processor configured to, in response to a specifying action performed by a user to specify a workflow that executes a process on electronic data selected by the user, cause a display to display a setting change screen to be used for changing settings of the workflow.

## Description

### Background

### (i) Technical Field

The present disclosure relates to an information processing apparatus, an information processing method, and a program.

### (ii) Related Art

There has been used a workflow that predefines processing operations of a series of processes on electronic data. By entering the electronic data into the workflow (execution of an electronic document in a workflow may be referred to herein as "enter an electronic document into a workflow"), the electronic data may be processed in accordance with the workflow.

Various technologies are proposed about the workflow. For example, Japanese Unexamined Patent Application Publication No. 2008-21315 discloses a workflow selection process for automatically selecting a workflow to input electronic data based on a file type of the electronic data. Japanese Unexamined Patent Application Publication No. 2021-27539 discloses an information processing apparatus in which a user may select a first mode and a second mode. In the first mode, selection of a workflow for processing electronic data is received before the electronic data is received. In the second mode, selection of a workflow for processing electronic data is received after the electronic data is received. Japanese Unexamined Patent Application Publication No. 2020-178301 discloses an information processing apparatus that extracts and displays workflow execution parameters.

### Summary

Various settings may be made for a workflow. Examples of the settings include settings to be referred to when processing an electronic document entered into a workflow. In particular, a user may change the settings of a workflow.

To change the settings of the workflow, the user generally performs an action for displaying a setting change screen on a display, and changes the settings of the workflow on the displayed setting change screen. However, the action for displaying the setting change screen on the display may be cumbersome to the user.

Accordingly, it is an object of the present disclosure to display the setting change screen on the display without the need to perform the action for displaying the setting change screen on the display.

According to a first aspect of the present disclosure, there is provided an information processing apparatus comprising a processor configured to, in response to a specifying action performed by a user to specify a workflow that executes a process on electronic data selected by the user, cause a display to display a setting change screen to be used for changing settings of the workflow.

According to a second aspect of the present disclosure, the processor is configured to execute the workflow on the electronic data in response to an instruction to confirm the settings of the workflow in the displayed setting change screen.

According to a third aspect of the present disclosure, the processor is configured to: keep, in a memory, pre-change settings of the workflow before change by an action of the user on the setting change screen and post-change settings of the workflow after the change by the action of the user on the setting change screen; refer to the post-change settings if one or more pieces of first electronic data selected in accordance with an application rule specified by the user are processed in the workflow; and refer to the pre-change settings if second electronic data other than the first electronic data is processed.

According to a fourth aspect of the present disclosure, the processor is configured to discriminably display, in the setting change screen, information indicating whether the settings changed by the user are applied only to a process on the electronic data selected by the user or also to a process on electronic data selected by other users.

According to a fifth aspect of the present disclosure, the processor is configured to operate in a first operation mode in which the setting change screen is displayed on the display in response to the specifying action of the user, or in a second operation mode in which the setting change screen is not displayed and the workflow is executed on the electronic data in response to the specifying action of the user.

According to a sixth aspect of the present disclosure, the processor is configured to: cause the display to display a workflow icon corresponding to the workflow, and a data icon corresponding to the electronic data; and cause the display to display the setting change screen in response to drag of the data icon onto the workflow icon by the user.

According to a seventh aspect of the present disclosure, there is provided a program causing a computer to execute a process for information processing, the process comprising: causing, in response to a specifying action performed by a user to specify a workflow that executes a process on electronic data selected by the user, a display to display a setting change screen to be used for changing settings of the workflow.

According to an eighth aspect of the present disclosure, there is provided an information processing method comprising: causing, in response to a specifying action performed by a user to specify a workflow that executes a process on electronic data selected by the user, a display to display a setting change screen to be used for changing settings of the workflow.

According to the first aspect of the present disclosure, it is possible to display the setting change screen on the display without the need to perform the action for displaying the setting change screen on the display.

According to the second aspect of the present disclosure, the user may execute the workflow on the electronic data by the instruction to confirm the settings.

According to the third aspect of the present disclosure, the user may specify the range of the first electronic data to be processed by referring to the post-change settings of the workflow.

According to the fourth aspect of the present disclosure, the user may grasp, in the setting change screen, whether the changed settings are applied only to the process on the electronic data selected by the user or also to the process on the electronic data selected by other users.

According to the fifth aspect of the present disclosure, the user may avoid displaying the setting change screen by the specifying action if not necessary.

According to the sixth aspect of the present disclosure, the user may display the setting change screen by dragging the data icon onto the workflow icon.

According to the seventh aspect of the present disclosure, it is possible to display the setting change screen on the display without the need to perform the action for displaying the setting change screen on the display.

According to the eighth aspect of the present disclosure, it is possible to display the setting change screen on the display without the need to perform the action for displaying the setting change screen on the display.

### Brief Description of the Drawings

An exemplary embodiment of the present disclosure will be described in detail based on the following figures, wherein:
Fig. 1 illustrates the configuration of an information processing apparatus according to an exemplary embodiment;
Fig. 2 illustrates an example of the structure of a workflow;
Fig. 3 illustrates an example of a screen related to a data management service;
Fig. 4 illustrates an example of a setting change dialog;
Fig. 5 illustrates an example of a setting change box;
Fig. 6 illustrates an example of a process addition button;
Fig. 7 illustrates an example of a screen after cancellation of a setting change screen;
Fig. 8 illustrates an example of a setting change screen displayed in a file attribute display screen;
Fig. 9 illustrates an example of a display switching checkbox in the setting change screen;
Fig. 10 illustrates an example of a setting application rule box;
Fig. 11 illustrates an example of a personal setting button; and
Fig. 12 is a flowchart illustrating a flow of a process in the information processing apparatus according to the exemplary embodiment.

### Detailed Description

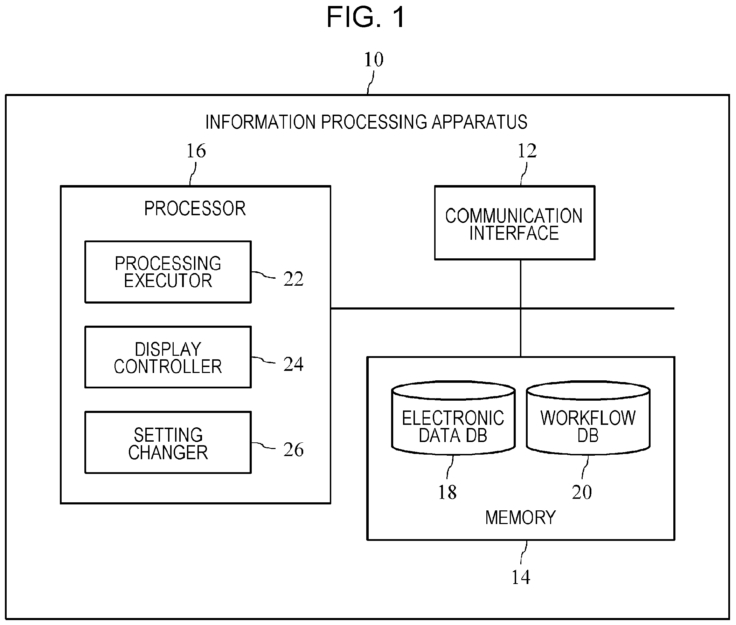

Fig. 1 illustrates the configuration of an information processing apparatus 10 according to an exemplary embodiment. The information processing apparatus 10 according to this exemplary embodiment is a server that provides a data management service for electronic data. In the data management service, for example, electronic data received from users is managed in a database, and the managed electronic data is provided to the users in response to users' request. In the data management service, various processes may be executed on the managed electronic data. The electronic data is typically an electronic document, but is not limited to the electronic document, and may be, for example, image data or program data.

Although details are described later, workflows may be defined in the data management service according to this exemplary embodiment. Each workflow includes preset processing operations of a series of processes on electronic data. The users may process the electronic data in accordance with the defined workflows. The users may set the processing operations of the processes in the workflows.

As long as functions described below may be exerted (in other words, an electronic data providing service described below may be provided), the information processing apparatus 10 is not limited to the server, and may be constituted by various computers. The functions of the information processing apparatus 10 described below may be implemented by cooperation of a plurality of computers.

As illustrated in Fig. 1, the information processing apparatus 10 according to this exemplary embodiment includes a communication interface 12, a memory 14, and a processor 16. If the information processing apparatus 10 is a personal computer or a tablet terminal, the information processing apparatus 10 may further include a display that displays various screens (e.g., liquid crystal panel) or an input interface to be used for inputting user's instructions (e.g., mouse or touch panel).

Examples of the communication interface 12 include a network interface card (NIC). The communication interface 12 exerts a function of communicating with other apparatuses via a communication network such as a local area network (LAN) or the Internet. Since the information processing apparatus 10 is the server in this exemplary embodiment, the communication interface 12 is accessed by a user terminal (e.g., personal computer or tablet terminal) of a user who wants to obtain the data management service. The communication interface 12 transmits, to the user terminal, screen information for displaying various screens on a display of the user terminal and electronic data managed in the data management service.

The memory 14 includes a hard disk drive (HDD), a solid state drive (SSD), an embedded multimedia card (eMMC), a read only memory (ROM), or a random access memory (RAM). The memory 14 stores an information processing program for operating individual components of the information processing apparatus 10. The information processing program may be stored in a non-transitory computer readable storage medium such as a universal serial bus (USB) memory or a CD-ROM. The information processing apparatus 10 may read and execute the information processing program in the storage medium. The memory 14 stores a user database (DB) (not illustrated) in which user IDs for uniquely identifying the users registered in the data management service are associated with authentication information (e.g., passwords).

As illustrated in Fig. 1, the memory 14 stores an electronic data DB 18 and a workflow DB 20.

The electronic data DB 18 stores electronic data managed in the information processing apparatus 10, that is, the data management service, and attribute information of the electronic data. In the electronic data DB 18 of this exemplary embodiment, a plurality of folders that store the electronic data are defined and each piece of electronic data is stored in the electronic data DB 18 by being stored in the folder. Examples of the attribute information of the electronic data include, but not limited to, information indicating the name of the electronic data, an extension (data format), a data amount, a user ID of a user who has uploaded the electronic data in the data management service, and a date of upload in the data management service.

In particular, the attribute information of electronic data currently subjected to processes related to a workflow (details are described later) includes information indicating the workflow. Examples of the information indicating the workflow include information for identifying the workflow into which the electronic data has been entered, and a user ID for identifying a user who has entered the electronic data into the workflow. In other words, the electronic data stored in the electronic data DB 18 includes electronic data associated with the workflow in which the processes are currently executed on the electronic data.

The workflow DB 20 stores information related to each workflow. The information related to the workflow includes information indicating settings of the workflow and information indicating the status of the workflow.

The settings of the workflow include the structure of the workflow. The structure of the workflow indicates processing operations of processes to be sequentially executed on electronic data, and the order of the processes. The workflow may include a plurality of processes to be executed in series, or processes to be executed in parallel. The workflow of this exemplary embodiment may include a single process.

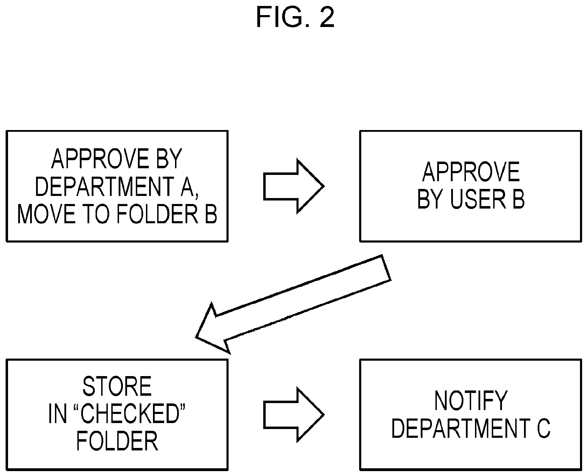

Fig. 2 illustrates an example of the structure of the workflow. In the workflow illustrated in Fig. 2, "Approve by department A, move to folder B" is defined as a first process (process to be executed firstly), "Approve by user B" is defined as a second process to be executed after completion of the first process (process to be executed secondly), "Store in "checked" folder" is defined as a third process to be executed after completion of the second process (process to be executed thirdly), and "Notify department C" is defined as a fourth process to be executed after completion of the third process (process to be executed fourthly).

Since such a workflow is defined in advance, the user may process electronic document in accordance with the workflow by entering the electronic document into the workflow.

The settings of the workflow include the processing operations of the processes in the workflow. For example, the settings of the workflow include the processing operation "Approve by department A, move to folder B" of the first process in the workflow illustrated in Fig. 2.

As in the first and third processes in the workflow illustrated in Fig. 2, folders defined in the electronic data DB 18 may be associated with the processes in the workflow. For example, the folder B is associated with the first process in the workflow illustrated in Fig. 2, and the "checked" folder is associated with the third process. In this manner, one or more folders may be associated with the workflow. In other words, the folders defined in the electronic data DB 18 include a folder associated with a specific workflow. One folder may be associated with a plurality of workflows. In other words, a plurality of workflows may use the same folder.

In general, electronic data entered into a workflow is stored in a folder associated with a process in the workflow. If folders are associated with a plurality of processes in the workflow, the electronic data entered into the workflow moves between the folders as the processes in the workflow proceed. For example, in the workflow illustrated in Fig. 2, the electronic data is stored in the folder B in the first process, and is stored in the "checked" folder from the folder B in the third process.

In the case where the folders are associated with the processes in the workflow, the settings of the workflow include the folders associated with the processes in the workflow.

The status of the workflow is a status of each electronic document entered into the workflow. For example, the status indicates which process has been completed on each electronic document among the processes defined in the workflow, or which folder defined in the workflow stores each electronic document.

As illustrated in Fig. 1, the processor 16 functions as a processing executor 22, a display controller 24, and a setting changer 26 based on the information processing program stored in the memory 14.

The processing executor 22 executes various processes related to the data management service. For example, in response to access to the data management service from a user terminal of a user, the processing executor 22 authenticates the user by a predetermined method (e.g., input of a user ID and a password). Then, the processing executor 22 executes a process on electronic data managed in the data management service based on the user's instruction. For example, the processing executor 22 stores electronic data from the user terminal into a folder in the electronic data DB 18 in response to the user's instruction. In response to the user's request, the processing executor 22 executes a process on electronic data stored in the electronic data DB 18, or transmits the electronic data to the user terminal of the user.

In particular, the processing executor 22 executes, in the data management service, a process related to electronic data in accordance with a workflow defined in the workflow DB 20. For example, in response to a user's instruction to enter predetermined electronic data (may be electronic data stored in the electronic data DB 18 or electronic data newly transmitted from a user terminal) into a certain workflow, the processing executor 22 refers to the workflow DB 20 to obtain settings of the workflow (e.g., structure, processing operation, and folder) under the user's instruction, and executes a process on the predetermined electronic data in accordance with the workflow.

The display controller 24 executes a process of causing the display to display screens related to the data management service. Since the information processing apparatus 10 is the server in this exemplary embodiment, the display controller 24 causes a display of a user terminal of a user accessing the data management service to display the screens related to the data management service. If the information processing apparatus 10 is a personal computer or a tablet terminal including a display, the display controller 24 may cause the display of the information processing apparatus 10 to display the screens related to the data management service.

The setting changer 26 executes a process of changing settings of a workflow defined in the workflow DB 20 based on a user's instruction.

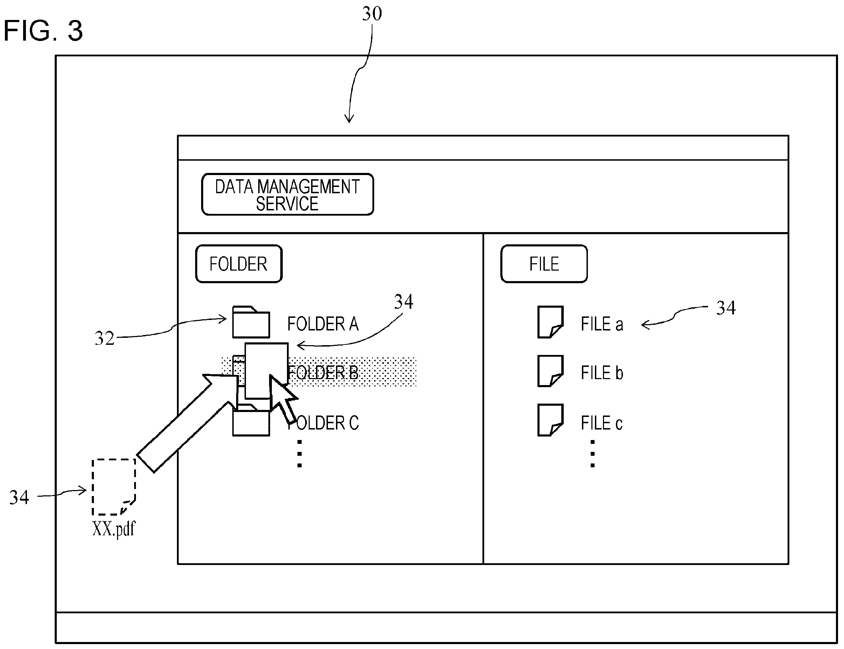

Details of the processes to be performed by the processing executor 22, the display controller 24, and the setting changer 26 are described with reference to Fig. 3 to Fig. 11 as appropriate.

Fig. 3 illustrates an example of a screen related to the data management service and displayed on the display of the user terminal by the display controller 24. In this exemplary embodiment, the display controller 24 causes the display of the user terminal to display a data management service window 30 showing contents of the data management service as illustrated in Fig. 3. The data management service window 30 shows folder icons 32 indicating folders defined in the electronic data DB 18, and data icons 34 indicating pieces of electronic data stored in the electronic data DB 18 (e.g., data icons corresponding to pieces of data stored in a specific folder). The screen showing such contents may be an initial screen to be displayed first in response to the access to the data management service from the user.

The contents in the data management service window 30 illustrated in Fig. 3 are an example of the screen provided from the data management service (i.e., the screen displayed by the display controller 24), and the data management service window 30 may show various screens in response to user's instructions. For example, in response to the user's instructions, the data management service window 30 may show a list of workflows defined in the workflow DB 20 and a screen showing settings of each workflow.

The user of the data management service may change settings of a workflow defined in the workflow DB 20. To change settings of a workflow, the user generally performs a series of actions described below. In the data management service window 30, the user performs an action for displaying a list of workflows, selects a desired workflow, performs an action for displaying a setting change screen for the settings of the selected workflow, and changes the settings on the setting change screen. In this manner, the user may change the settings of the workflow. In this exemplary embodiment, the user may change the settings of the workflow more easily. Details of the processes are described below.

In response to a user's specifying action for specifying a workflow that executes a process on electronic data selected by the user, the display controller 24 causes the display of the user terminal of the user to display a setting change screen to be used for changing settings of the workflow. Various actions are exemplified as the specifying action, including an action of dragging a data icon 34 corresponding to electronic data onto a workflow icon corresponding to a workflow on the display.

Referring to Fig. 3, the folder B is associated with a certain workflow. The folder B constitutes the workflow. A folder icon 32 corresponding to the folder B may be regarded as a workflow icon corresponding to the workflow.

The user selects electronic data to be entered into the workflow (electronic data "XX.pdf"), and drags a data icon 34 corresponding to the selected electronic data onto the folder icon 32 corresponding to the folder B as illustrated in Fig. 3. This action corresponds to the specifying action for specifying the workflow (workflow associated with folder B) that executes a process on the electronic data selected by the user (electronic data "XX.pdf"). In response to the specifying action, the display controller 24 displays a setting change screen for the workflow associated with the folder B in the data management service window 30.

The folder icon 32 corresponding to the folder B is not only the folder object but may also be an area including the folder name displayed on the side. The electronic data selected by the user may be electronic data stored in the user terminal (i.e., electronic data that has not been stored in the electronic data DB 18), or electronic data stored in the electronic data DB 18 with its corresponding data icon 34 shown in the data management service window 30. The drag destination folder icon 32 (i.e., workflow icon) is shown in the data management service window 30.

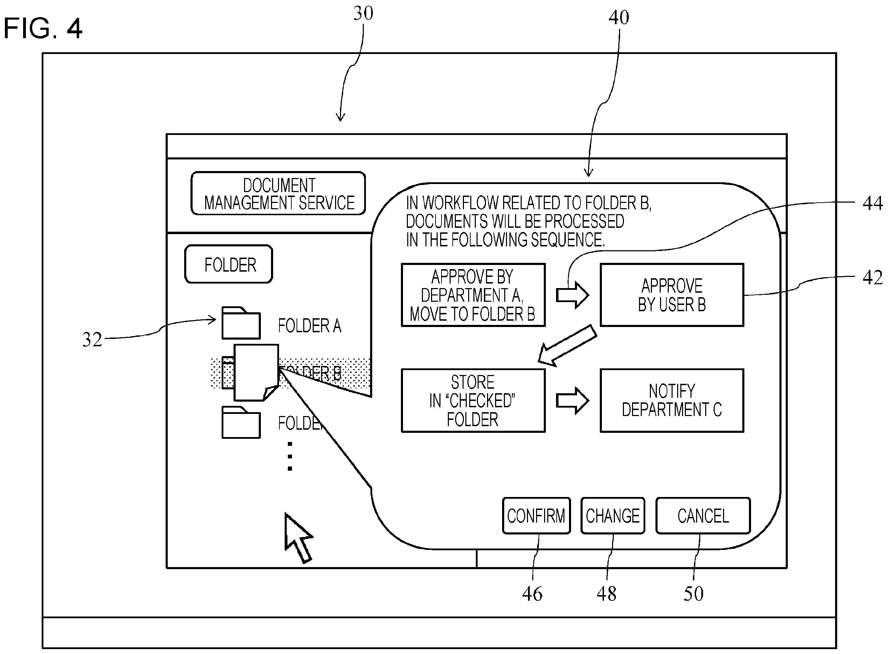

Fig. 4 illustrates a display example of the setting change screen. In this exemplary embodiment, the display controller 24 displays, as the setting change screen, a setting change dialog 40 in the data management service window 30 to change the settings of the workflow selected by the user (in the example of Fig. 3, the workflow associated with the folder B).

In this exemplary embodiment, the setting change dialog 40 shows the structure of the workflow. Specifically, the setting change dialog 40 includes a processing operation object 42 indicating an operation of a process in the workflow. If the workflow includes a plurality of processes, the setting change dialog 40 includes a plurality of processing operation objects 42 and arrow objects 44 indicating the order of the processes. The setting change dialog 40 also includes a confirmation button 46, a change button 48, and a cancellation button 50.

If the folder selected by the user is associated with a plurality of workflows, the settings of the plurality of workflows may be changed in the setting change dialog 40.

The display controller 24 displays the setting change dialog 40 by simply dragging the data icon 34 onto the folder icon 32 instead of drag and drop of the data icon 34 onto the folder icon 32. When the user drags the data icon 34 sequentially onto a plurality of folder icons 32, the setting change dialog 40 sequentially shows the structures of the workflows associated with the respective folders. Thus, the user may view the structures of the workflows associated with the respective folders by a simple action.

The user views the setting change dialog 40 displayed by dragging the data icon 34 onto the folder icon 32, and performs a dropping action if the user wants to change the settings of the workflow shown in the setting change dialog 40. In response to the action of dragging and dropping the data icon 34 onto the folder icon 32, the electronic data corresponding to the data icon 34 is generally entered into the workflow associated with the folder indicated by the folder icon 32. In this exemplary embodiment, the display in the setting change dialog 40 is maintained by the drag and drop action instead of entering the electronic data immediately into the workflow.

In the setting change dialog 40 of this exemplary embodiment, the user may simply change a processing operation of each process in the specified workflow, change a folder associated with the process, and add a new process to the workflow. That is, the setting change dialog 40 of this exemplary embodiment is a dialog for a simple setting change of the workflow specified by the user. Alternatively, a detailed setting change of the workflow (e.g., change of all the settings) may be made in the setting change dialog 40.

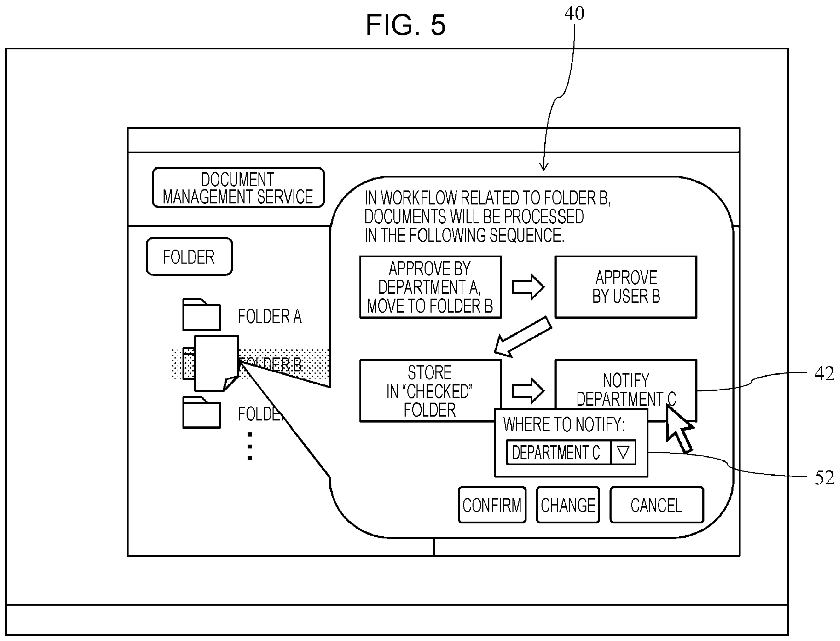

If the user selects the processing operation object 42 by, for example, placing a cursor on the processing operation object 42 by a mouse action, the display controller 24 displays a setting change box 52 for changing details of the selected processing operation object 42 as illustrated in Fig. 5. In the setting change box 52 in the example of Fig. 5, the notification destination in the processing operation "Notify department C" indicated by the selected processing operation object 42 may be changed. The processing operation to be changed is not limited thereto. For example, if the processing operation indicated by the selected processing operation object 42 is to store electronic data in a folder, the folder to store the electronic data by the process may be changed in the setting change box 52.

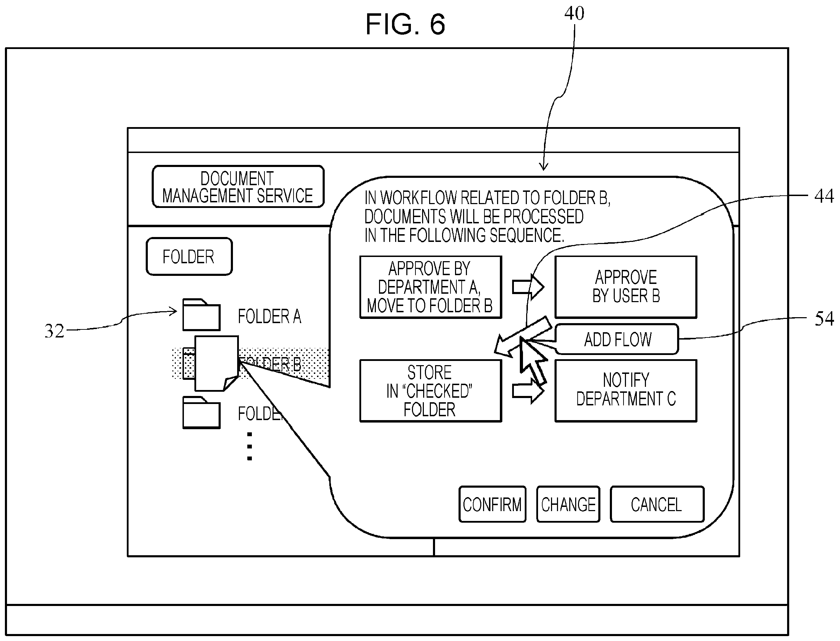

If the user selects the arrow object 44 by, for example, placing the cursor on the arrow object 44 by a mouse action, the display controller 24 displays a process addition button 54 for adding a new process to be executed between two processing operations connected by the selected arrow object 44 as illustrated in Fig. 6. In response to a user's action on the process addition button 54, the display controller 24 displays a box for determining details of the process to be added (not illustrated), and the user determines the details of the process in the box. The new process is added at a position pointed by the selected arrow object 44.

If the user changes the settings of the workflow in the setting change dialog 40 and operates the confirmation button 46, the setting changer 26 changes the settings of the workflow. That is, the setting changer 26 updates the settings of the workflow in the workflow DB. That is, the confirmation button 46 is used by the user for inputting an instruction to confirm the settings of the workflow. When the user operates the confirmation button 46, the display controller 24 closes the setting change dialog 40, and the processing executor 22 starts to execute the workflow on the electronic data selected by the user. In other words, the electronic data selected by the user (in the example of Fig. 3, the electronic data "XX.pdf") is entered into the workflow.

The change button 48 in the setting change dialog 40 is used for displaying a detailed setting change screen for a detailed setting change of the workflow. That is, when the user operates the change button 48, the display controller 24 displays the detailed setting change screen for the workflow in place of the setting change dialog 40.

The cancellation button 50 in the setting change dialog 40 is used for canceling the setting change of the workflow in the setting change dialog 40. That is, when the user operates the cancellation button 50, the setting changer 26 dismisses the settings made by the user in the setting change dialog 40, and does not update the settings of the workflow in the workflow DB.

When the user operates the cancellation button 50, the display controller 24 closes the setting change dialog 40. The user may want to cancel the change of the settings of the workflow and enter the selected electronic data into the workflow. In this case, time and effort are needed to drag and drop the data icon 34 corresponding to the electronic data onto the folder icon 32 corresponding to the workflow again after the setting change dialog 40 is closed.

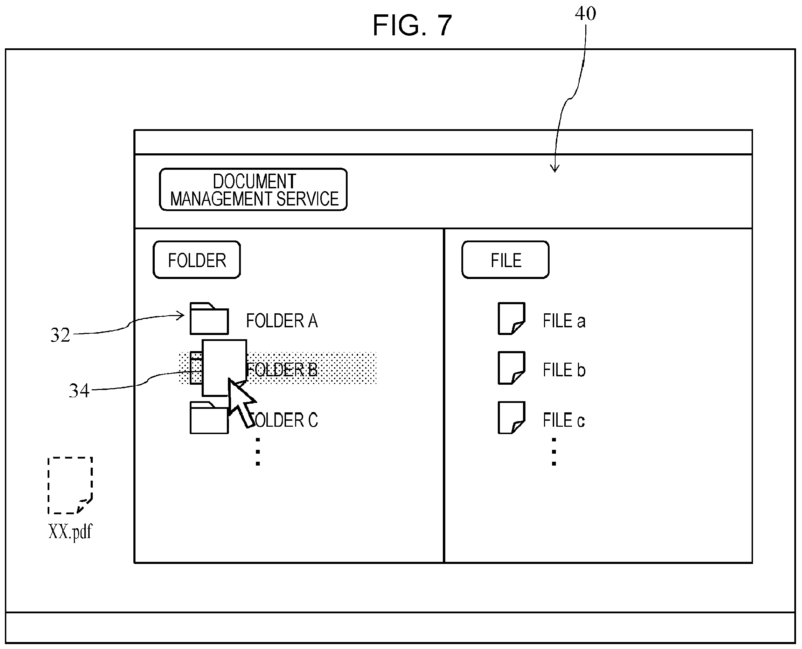

In view of this, the display controller 24 may hold the dragged data icon 34 on the folder icon 32 on the screen as illustrated in Fig. 7. In response to a user's action on the held data icon 34 (e.g., click), the electronic data corresponding to the data icon 34 may be entered into the workflow corresponding to the folder icon 32.

In the exemplary embodiment described above, the specifying action for specifying the workflow that executes a process on the electronic data selected by the user is the action of dragging the data icon 34 onto the folder icon 32, but is not limited thereto.

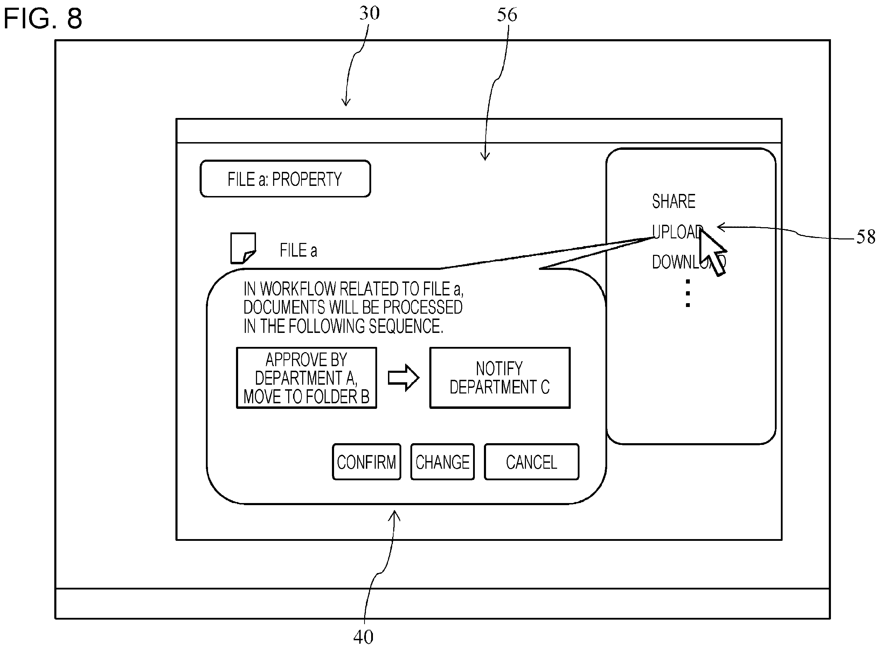

For example, in response to a user's instruction, the display controller 24 may display an attribute display screen showing attribute information (may be referred to also as "property") of the electronic data stored in the electronic data DB 18. Fig. 8 illustrates an attribute display screen 56 displayed in the data management service window 30. In the attribute display screen 56, the user may execute, on the electronic data, a processing operation associated with the workflow in advance. For example, the attribute display screen 56 in Fig. 8 includes process instruction buttons 58 to be used for instructing the processing executor 22 to execute the processes on the electronic data. The user may execute a desired process on the electronic data by operating any process instruction button 58.

The processing operations to be executed under instructions using the process instruction buttons 58 may include a processing operation associated with a predetermined workflow. For example, a processing operation "upload" may be associated with a workflow for executing upload (e.g., a workflow that defines processes of giving approval for electronic data to be uploaded (stored in the electronic data DB 18) from a predetermined department, storing the electronic data in a predetermined folder, and notifying a certain department). In response to a user's action on the process instruction button 58 related to the processing operation "upload", the processing executor 22 executes the workflow on the electronic data.

In this case, the display of the attribute display screen 56 for the electronic data corresponds to the selection of the electronic data by the user, and the action on the process instruction button 58 corresponding to the processing operation associated with the predetermined workflow in the attribute display screen 56 corresponds to the specifying action for specifying the workflow that executes a process on the electronic data.

In response to the user's action on the process instruction button 58 associated with the workflow in the attribute display screen 56, the display controller 24 displays the setting change dialog 40 as illustrated in Fig. 8.

In this exemplary embodiment, in response to the user's specifying action for specifying the workflow that executes the process on the electronic data selected by the user, the display controller 24 displays the setting change dialog 40 to be used for changing the settings of the workflow. The specifying action may originally be the action for entering the electronic data into the workflow. According to this exemplary embodiment, the user may display the setting change screen without the need to perform the action for displaying the setting change screen. According to this exemplary embodiment, the electronic data is entered into the workflow in response to the action on the confirmation button 46 after the change of the settings of the workflow in the setting change dialog 40. That is, according to this exemplary embodiment, the setting change dialog 40 may be displayed in the action for entering the electronic data into the workflow. According to this exemplary embodiment, the setting change dialog 40 may be displayed more simply than in the related art in which the setting change dialog is displayed by the series of actions described above.

Some users may be annoyed with the display of the setting change dialog 40 every time the specifying action is performed. Therefore, the user may make a setting as to whether to display the setting change dialog 40 in response to the specifying action. An operation mode of the information processing apparatus 10 in which the setting change dialog 40 is displayed in response to the user's specifying action is referred to herein as "first operation mode". An operation mode of the information processing apparatus 10 in which the setting change dialog 40 is not displayed in response to the user's specifying action is referred to herein as "second operation mode". In the second operation mode, the processing executor 22 executes the workflow on the electronic data in response to the specifying action.

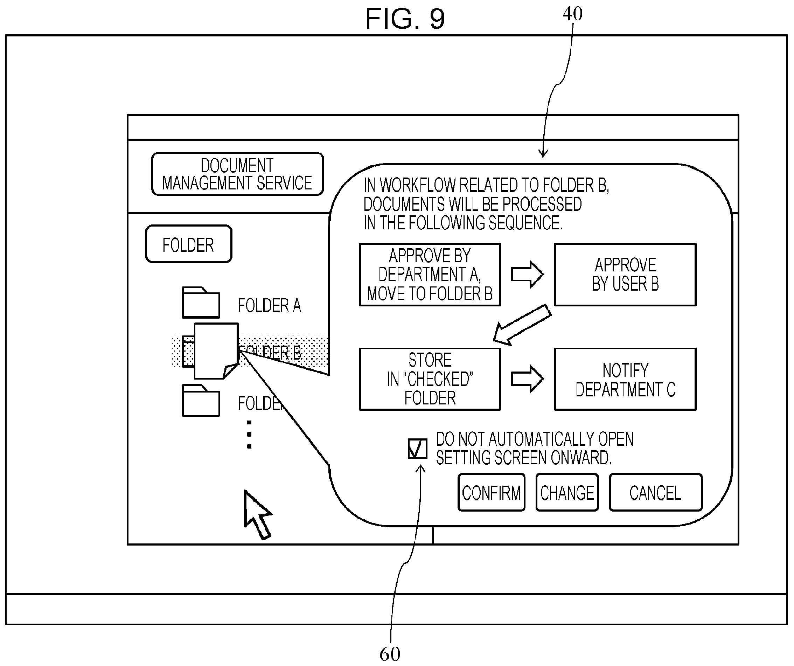

For example, as illustrated in Fig. 9, the display controller 24 may display the setting change dialog 40 including a display switching checkbox 60 for a setting as to whether to display the setting change dialog 40 in response to the specifying action. The user may change the operation mode of the information processing apparatus 10 to the second mode by marking the display switching checkbox 60. That is, the setting change dialog 40 is not displayed in response to the specifying action onward. The operation mode of the information processing apparatus 10 may be changed to the first mode again in a different setting screen. The first operation mode and the second operation mode may be switched by different methods.

The operation mode of the information processing apparatus 10 may be set for each user. For example, in the user DB stored in the memory 14, the user IDs are prestored in association with pieces of information indicating operation modes to be set in response to access to the information processing apparatus 10 (i.e., data management service) from users indicated by the user IDs, respectively. The display controller 24 determines, based on the authenticated user ID and the information stored in the user DB, the operation mode of the information processing apparatus 10, that is, whether to display the setting change dialog 40 in response to the specifying action of the user.

It may be inappropriate that the settings of the workflow changed in the setting change dialog 40 are applied to the processes on all the pieces of electronic data entered into the workflow. Therefore, the user may set a range of electronic data to which the changed settings of the workflow are applied. The settings of the workflow before the change by the user's action on the setting change dialog 40 are referred to herein as "pre-change settings", and the settings of the workflow after the change by the user's action on the setting change dialog 40 are referred to herein as "post-change settings". In the pieces of electronic data entered into the workflow, the electronic data to which the post-change settings are applied is referred to as "first electronic data", and the electronic data to which the pre-change settings are applied (in other words, the electronic data other than the first electronic data) is referred to as "second electronic data".

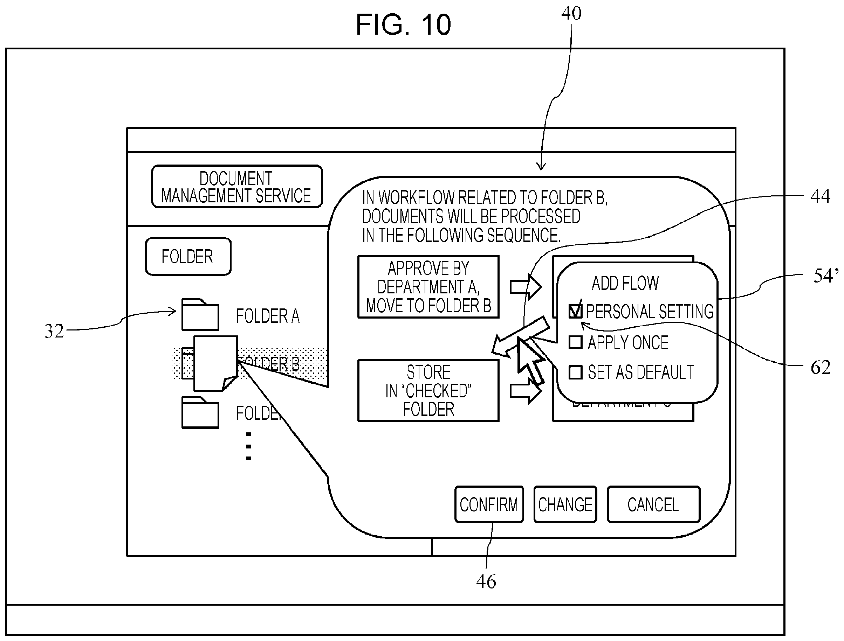

In this exemplary embodiment, the user may specify an application rule for determining the range of the first electronic data in the setting change dialog 40. For example, in response to the selection of the arrow object 44 by the user, the display controller 24 displays a process addition button 54' including application rule checkboxes 62 to be used for specifying the application rule as illustrated in Fig. 10. In the example of Fig. 10, the process addition button 54' includes selective application rule checkboxes 62 indicating "Personal setting", "Apply once", and "Set as default".

For example, if the user operates the confirmation button 46 with "Personal setting" selected in the application rule checkboxes 62, the range of the first electronic data to which the post-change settings are applied, in this case, the first electronic data on which the added new process is executed, may be set to the electronic data entered into the workflow by the user. In other words, electronic data entered into the workflow by any other user is the second electronic data to which the pre-change settings are applied. In this case, the added new process is not executed on the second electronic data.

If the user operates the confirmation button 46 with "Apply once" selected in the application rule checkboxes 62, the range of the first electronic data to which the post-change settings are applied may be set only to the electronic data currently entered into the workflow by the user. In other words, electronic data other than the electronic data currently selected by the user is the second electronic data to which the pre-change settings are applied.

If the user operates the confirmation button 46 with "Set as default" selected in the application rule checkboxes 62, the range of the first electronic data to which the post-change settings are applied may be set to all the pieces of electronic data entered into the workflow. In this case, there is no second electronic data.

The above-mentioned application rules for determining the range of the first electronic data are examples, and various other application rules are conceivable. For example, the first electronic data may be a predetermined number of pieces of electronic data entered into the workflow, electronic data entered into the workflow within a predetermined period, or electronic data entered by a user belonging to a certain group.

When the user operates the confirmation button 46 with the settings of the workflow changed while specifying the application rule for determining the range of the first electronic data in the setting change dialog 40, the setting changer 26 newly stores the post-change settings in association with the workflow in the workflow DB 20 while keeping the pre-change settings associated with the workflow. The setting changer 26 also stores, in the workflow DB 20, the specified application rule and the user ID of the user in association with the workflow.

When the electronic data is entered into the workflow, the processing executor 22 refers to the workflow DB to determine whether the electronic data is the first electronic data or the second electronic data, in other words, whether to execute the workflow on the electronic data by applying the pre-change settings or the post-change settings.

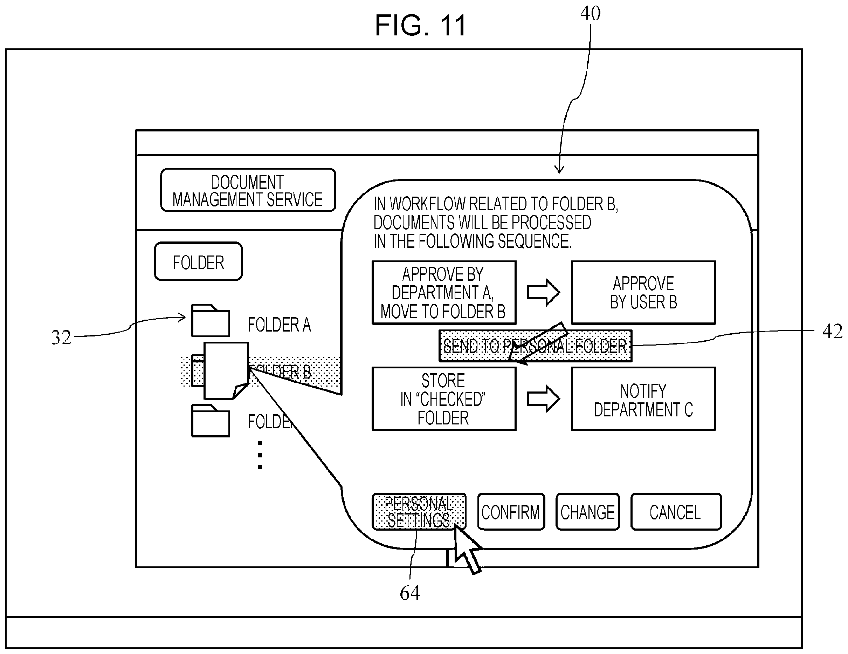

The method for specifying the application rule for determining the range of the first electronic data is not limited to the method described above. For example, as illustrated in Fig. 11, the display controller 24 may display the setting change dialog 40 including a personal setting button 64. If the user operates the personal setting button 64 and changes the settings of the workflow, the range of the first electronic data to which the post-change settings are applied may be set to the electronic data entered into the workflow by the user.

The user may grasp whether the settings changed in the setting change dialog 40 are applied only to processes on the electronic data entered by the user or also to processes on electronic data entered into the workflow by other users. Therefore, the display controller 24 may discriminably display, in the setting change dialog 40, information indicating whether the changed settings are applied only to processes on the electronic data entered by the user or also to processes on electronic data entered into the workflow by other users.

For example, if the user operates the personal setting button 64 and changes the settings to add a new process "Send to personal folder", the display controller 24 displays, as illustrated in Fig. 11, a processing operation object 42 corresponding to the process "Send to personal folder" in a format different from those of the other processing operation objects 42 (i.e., the processing operation objects 42 present before the change). The user may grasp that the process "Send to personal folder" is applied only to the electronic data entered by the user. Also in the case where "Personal setting" or "Apply once" is selected in the application rule checkboxes 62 in the example of Fig. 10, the display controller 24 may discriminably display, in the setting change dialog 40, information indicating whether the changed settings are applied only to processes on the electronic data entered by the user or also to processes on electronic data entered into the workflow by other users.

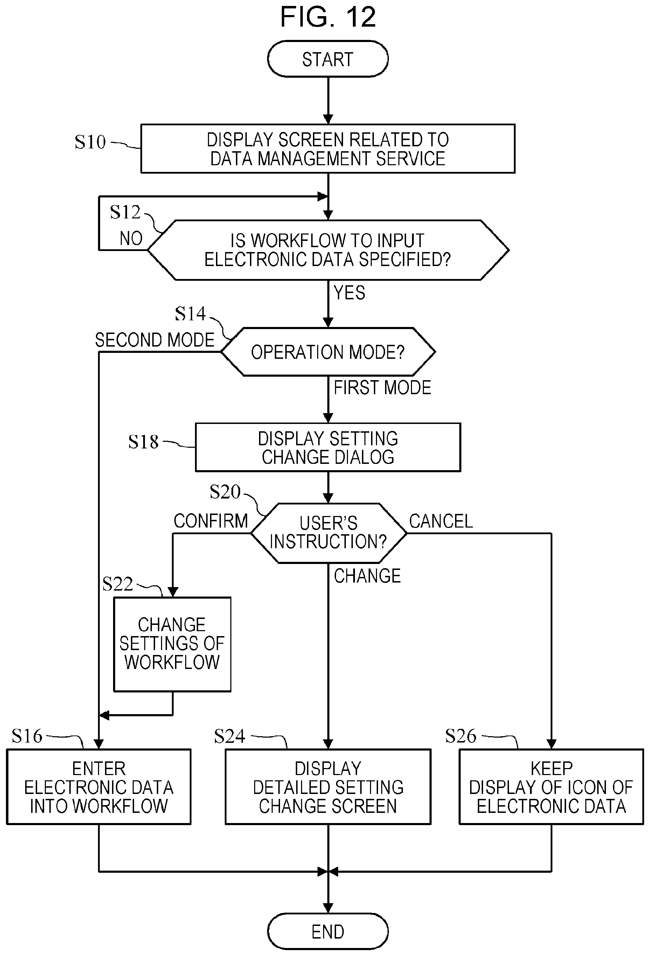

The configuration of the information processing apparatus 10 according to this exemplary embodiment is as described above. A flow of a process in the information processing apparatus 10 according to this exemplary embodiment is described with reference to a flowchart of Fig. 12.

In Step S10, in response to access to the data management service from a user, the processing executor 22 authenticates the user. If the user is authenticated, the display controller 24 causes a display of a user terminal of the user to display the data management service window 30 (see Fig. 3).

In Step S12, the display controller 24 determines whether the user performs the specifying action for specifying a workflow that executes a process on electronic data selected by the user. If the specifying action is performed, the process proceeds to Step S14.

In Step S14, the processing executor 22 determines whether the operation mode of the information processing apparatus 10 for the user is the first operation mode or the second operation mode.

If the operation mode of the information processing apparatus 10 is the second operation mode, the process proceeds to Step S16. In Step S16, the processing executor 22 enters the electronic data selected by the user in Step S12 into the workflow specified by the user in Step S12.

If the operation mode of the information processing apparatus 10 is the first operation mode, the process proceeds to Step S18. In Step S18, the display controller 24 displays the setting change dialog 40 in the data management service window 30 (see Fig. 4). In the setting change dialog 40, the user may change the settings of the workflow.

In Step S20, the processing executor 22 determines a user's instruction input to the setting change dialog 40.

If the user inputs a confirmation instruction to the setting change dialog 40 (e.g., operates the confirmation button 46), the process proceeds to Step S22. In Step S22, the setting changer 26 stores the changed settings in the workflow DB 20. Then, the process proceeds to Step S16. In Step S16, the processing executor 22 enters the electronic data selected by the user in Step S12 into the workflow specified by the user in Step S12.

If the user inputs a change instruction to the setting change dialog 40 (e.g., operates the change button 48), the process proceeds to Step S24. In Step S24, the display controller 24 displays a detailed setting change screen for the workflow in place of the setting change dialog 40. When the user changes the settings of the workflow on the detailed setting change screen, the setting changer 26 stores the changed settings in the workflow DB 20, and the processing executor 22 enters the electronic data corresponding to the data icon 34 into the workflow corresponding to the folder icon 32.

If the user inputs a cancellation instruction to the setting change dialog 40 (e.g., operates the cancellation button 50), the process proceeds to Step S26. In Step S26, the display controller 24 closes the setting change dialog 40, and holds the dragged data icon 34 on the folder icon 32 on the screen. In response to a user's action on the held data icon 34, the processing executor 22 enters the electronic data corresponding to the data icon 34 into the workflow corresponding to the folder icon 32.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to, in response to a specifying action performed by a user to specify a workflow that executes a process on electronic data selected by the user, cause a display to display a setting change screen to be used for changing settings of the workflow.

2. The information processing apparatus according to Claim 1, wherein the processor is configured to execute the workflow on the electronic data in response to an instruction to confirm the settings of the workflow in the displayed setting change screen.

3. The information processing apparatus according to Claim 1, wherein the processor is configured to:
keep, in a memory, pre-change settings of the workflow before change by an action of the user on the setting change screen and post-change settings of the workflow after the change by the action of the user on the setting change screen;
refer to the post-change settings if one or more pieces of first electronic data selected in accordance with an application rule specified by the user are processed in the workflow; and
refer to the pre-change settings if second electronic data other than the first electronic data is processed.

4. The information processing apparatus according to Claim 3, wherein the processor is configured to discriminably display, in the setting change screen, information indicating whether the settings changed by the user are applied only to a process on the electronic data selected by the user or also to a process on electronic data selected by other users.

5. The information processing apparatus according to Claim 1, wherein the processor is configured to operate in a first operation mode in which the setting change screen is displayed on the display in response to the specifying action of the user, or in a second operation mode in which the setting change screen is not displayed and the workflow is executed on the electronic data in response to the specifying action of the user.

6. The information processing apparatus according to Claim 1, wherein the processor is configured to:
cause the display to display a workflow icon corresponding to the workflow, and a data icon corresponding to the electronic data; and
cause the display to display the setting change screen in response to drag of the data icon onto the workflow icon by the user.

7. A program causing a computer to execute a process for information processing, the process comprising:
causing, in response to a specifying action performed by a user to specify a workflow that executes a process on electronic data selected by the user, a display to display a setting change screen to be used for changing settings of the workflow.

8. An information processing method comprising:
causing, in response to a specifying action performed by a user to specify a workflow that executes a process on electronic data selected by the user, a display to display a setting change screen to be used for changing settings of the workflow.
